# EUROPEAN PATENT SPECIFICATION

(11) **EP 4 382 330 B1**
(45) Date of publication and mention of the grant of the patent: **25.03.2026**
(21) Application number: 22211774.9
(22) Date of filing: 06.12.2022
(51) Int. Cl.: B60J 7/043

(54) **ROOF SYSTEM FOR A VEHICLE**
DACHSYSTEM FÜR EIN FAHRZEUG
SYSTÈME DE TOIT POUR VÉHICULE

(43) Date of publication of application: 12.06.2024
(73) Proprietor: Inalfa Roof Systems Group B.V., 5807 GW Oostrum (NL)
(72) Inventor: Jüngling, Rainer Gerhard, 41179 Mönchengladbach (DE); van den Boomen, Ward Johannes, 5534 BB Netersel (NL); Hamers, Claudia Gerardus Maria, 5804 XK Venray (NL); Tascioglu, Mert Memduh, 5644 PB Eindhoven (NL)
(74) Representative: De Vries & Metman

(56) References cited:
- EP-A2- 1 586 475
- DE-B3- 102013 109 099

## Description

The invention relates to a roof system for a vehicle according to the preamble of claim 1.

Such roof system is known from document EP 1 586 475 A2.

It is one of the objects to further improve the prior art roof system.

To obtain these and other objects, the roof system for a vehicle is characterized as set forth in claim 1.

The first slide shoe of the front device is attached to a first lever that not only slides but also rotates when the slide shoe travels through the inclining front portion, this lever may increase the lifting movement of the front end of the panel support, if desired, so that a higher lifting movement could be obtained or the same lifting movement with a lower front portion, thereby decreasing the total package at the front of the roof system. Further, it is advantageous to have a slide shoe mounted to a separate lever, because it is now easier to lengthen or shorten the simplified panel support, thereby making it easier to modify the design of the roof system (long-er/shorter) thus increasing the modularity of the roof system. The first lever also enables the panel support to rotate, for example between the closed position and the venting position, without rotating the slide shoe(s) at the front of the closure panel as the panel support may rotate with respect to the first lever which may be stationary. This simplifies the design of the slide shoe(s) and guide curve.

The first lever comprises a second slide shoe at a distance in longitudinal direction behind the first slide shoe, which second slide shoe is preferably in engagement with the stationary guide curve.

This is a very simple manner to cause the first lever to rotate when the first slide shoe travels through the inclining front portion of the stationary guide curve.

For example, the second slide shoe may be in engagement with a substantially straight portion of the stationary guide curve connecting to a rear end of the front portion thereof.

In one embodiment, the panel support is connected to the first lever at a position above and in front of the first slide shoe.

This increases the leverage of the first lever of the front device.

The first lever in accordance with the invention comprises a third slide shoe substantially in line with the first slide shoe and in engagement with a second stationary guide curve parallel to the stationary guide curve, wherein the third slide shoe is laterally spaced from the first slide shoe, and wherein the first and second slide shoes are positioned on one side of the panel support and the third slide shoe is positioned on opposite side of the panel support

These features will increase the stability of the front device.

Further, the panel support is attached to the closure panel via a plurality of screwed connections, wherein a front screwed connection is arranged at a longitudinal position between the first and second slide shoes considered in the closed position of the closure panel and is reachable with a tool from the side of the panel support where the third slide shoe is positioned.

This makes it possible to change the height of the closure panel at the front side when the closure panel is in its closed position and to tighten the connection when correct. Adapting the height of the closure panel is easiest in its closed position because the fixed roof of the vehicle is the reference height then.

Preferably, the front device comprises a second lever which is pivotally connected to the panel support on one of its ends and which is controlled by the driving slide, such that the second lever is allowed to pivot when the closure panel is moved in vertical direction, and which is driven by the driving slide when the closure panel is moved in longitudinal direction.

This second lever enables both the vertical and longitudinal movements of the closure panel at its front side.

Preferably, the driving slide and the second lever are in engagement with each other through a curve and pin connection, wherein the curve has a sliding portion enabling the pin to move with respect to the curve in longitudinal direction of the vehicle and a locking portion disabling the pin to move with respect to the curve in longitudinal direction of the vehicle.

This results in a reliable switch between rotational and sliding movements of the closure panel.

The second lever may be positioned at a distance behind the first lever.

The panel support is attached to the closure panel via a plurality of screwed connections, wherein a front screwed connection is arranged at a longitudinal position between the pivotal connections of the first and second lever to the panel support.

These positions of the levers enable the final adjustment and tightening of the front screwed connection in the closed position of the closure panel when the roof system is built into the vehicle roof.

Further details and advantages of the invention will become clearer from the following description of embodiments of the roof system with reference to the drawings.
Fig. 1 is a partial perspective view of an automobile provided with a roof system with the closure panel of the roof system in an open position.
Fig. 2a, 2b are enlarged perspective views of the operating mechanism for the closure panel on the right- and lefthand side of the closure panel, the operating mechanisms being in a position in which the closure panel is at the start of its sliding movement.
Fig. 3a is an exploded view of the operating mechanism of Fig. 2b.
Fig. 3b is an enlarged view of the front portion of the operating mechanism of Fig. 3a as seen from the other side.
Fig. 4 is an enlarged plan view of the front portion of the operating mechanism of Fig. 2b.
Fig. 5a is a sectional view along the line Va - Va in Fig. 4 in a position in which the closure panel is closed.
Fig. 5b is a sectional view along the line Vb - Vb in Fig. 4 to show parts hidden in Fig. 5a.
Figs. 6a and 6b are sectional views corresponding to those of Figs. 5a and 5b but showing the operating mechanism in a position in which the closure panel is in its tilt position.
Figs. 7a and 7b are sectional views corresponding to those of Figs. 5a and 5b but showing the operating mechanism in a position in which the closure panel is at the start of its sliding movement.

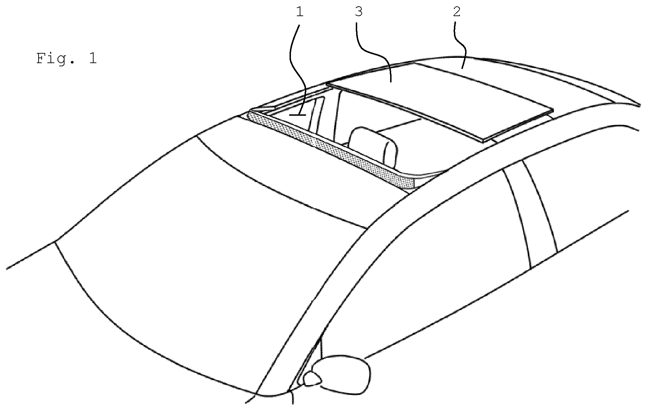

Fig. 1 shows part of a vehicle, in particular an automobile, which comprises at least a roof opening 1 defined in a (stationary) roof part 2. A closure, here in the form of a closure panel 3, is movable between a closed position (not shown) in which it closes roof opening 1, and an open position (Fig. 1) in which it opens roof opening 1 and in which it is positioned at least partially above roof part 2, here the fixed roof part adjoining the rear edge of the roof opening 1. To reach this position, closure panel 3 will first be moved to a so-called tilt or venting position in which the rear edge of closure panel 3 is lifted and closure panel 3 is therefore in a rearwardly and upwardly inclined position. From this tilt position, closure panel 3 is lifted at its front edge and is simultaneously slid rearwardly. Some variations of these movements are conceivable. For example, when closure panel 3 is moved from the closed to the tilt position, it could also slide a small distance rearward or forward and/or the front edge could be lifted slightly. Other variations are possible.

As is known per se such a roof system (which is also known as a spoiler roof or exterior sliding roof) could comprise additional elements, such as for example a tiltable wind deflector positioned ahead of the roof opening 1, or further movable or stationary panels, for example in a position behind closure panel 3 when it is in its closed position. In fact, in the present embodiment, the roof part behind the roof opening 1 is formed by a roof panel 2' which may be a stationary roof panel or a movable panel.

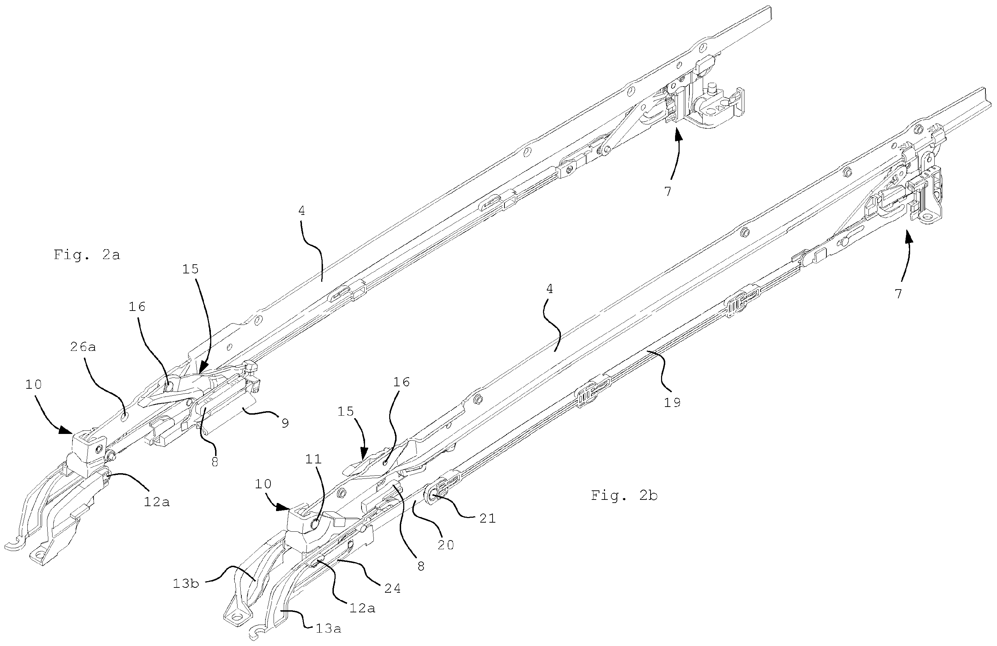

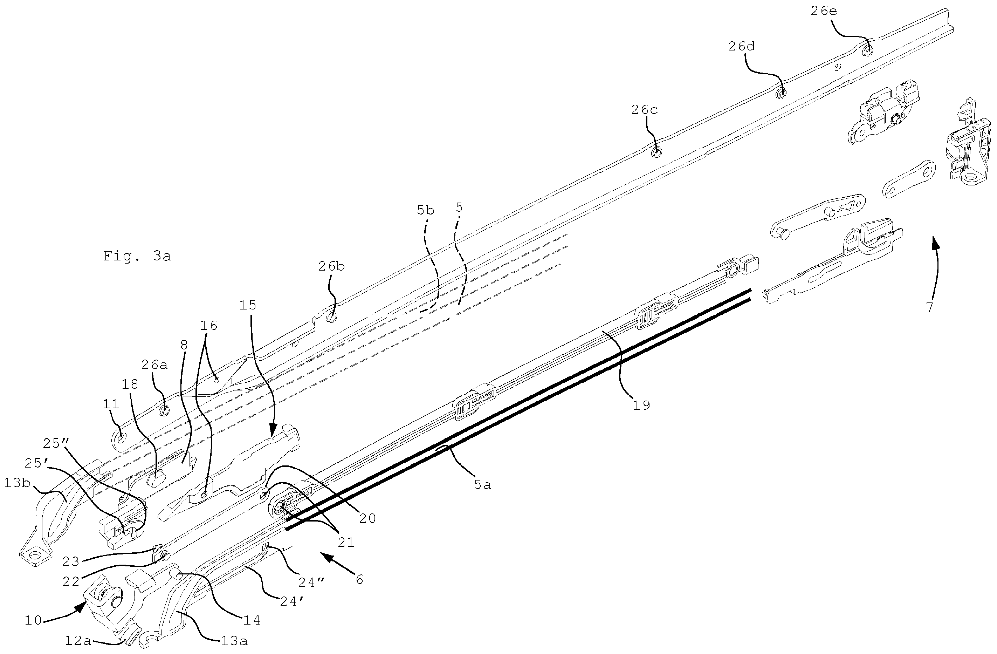

Figs. 2a, 2b, 3a, 3b and 4 show the parts of an operating mechanism for closure panel 3 in order to move it between the closed and open positions. Figs. 2a and 2b show the operating mechanism on both longitudinal sides of closure panel 3, and it is noted that the same parts albeit in mirror image are present on both sides of closure panel 3. The closure panel 3 comprises for example a glass or plastic transparent or metal non-transparent sheet supported on the longitudinal sides by a panel support 4 fixed to the sheet, for example by encapsulation material and/or any other means, such as glue, bolts or the like. At each longitudinal side edge of roof opening 1 there is provided a stationary guide rail 5 having several guide grooves in which parts of the operating mechanism are slidably guided. This guide rail 5 is shown partly by interrupted lines in Fig. 3a and a groove 5a of another part of guide rail 5 is shown by uninterrupted lines in Fig. 3a. The guide rails 5 are straight or slightly curved in order to follow the curvature of the vehicle roof. Such guide rails 5 are shown for example in US 9,969,246.

To move closure panel 3 in longitudinal (along the guide rail 5) and vertical (substantially perpendicular to the guide rail 5) directions, the operating mechanism comprises a front device 6 to move the front side of closure panel 3 in horizontal and vertical direction and a rear device 7 to move the rear side of closure panel 3, in this case mainly in vertical direction, i.e., up and down. In this embodiment, rear device 7 is not or hardly not used for sliding panel 3 in longitudinal direction, but rear device 7 is adapted to allow panel 3 to slide with respect thereto when front device 6 moves panel 3 in longitudinal direction. Such rear device 7 is e.g., disclosed in DE202018104104.5U. Rear device 7 is not further described here.

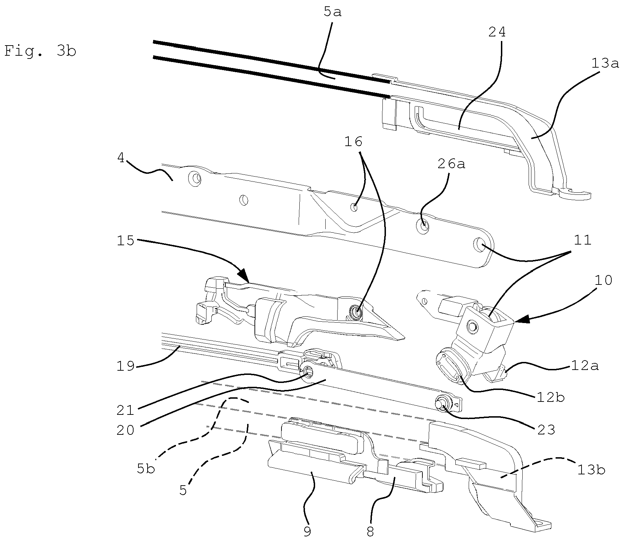

The front device 6 is driven by a driving slide 8 connected to a drive cable (not shown) or other elongated drive member in engagement with a drive motor (not shown), in particular an electric drive motor, or a manual drive to move the drive cable back and forth. The driving slide 8 is slidably guided in guide rail 5. Fig. 3b shows a cable attachment 9 enabling the drive cable to be attached to driving slide 8.

Panel support 4 is supported on its front end by a first lever 10 pivotally attached to panel support 4 by a pivot 11 near the upper side of lever 10. At the lower side of lever 10 it is slidably supported by slide shoes 12a and 12b engaging in guide curves, partly formed by substantially straight groove 5a and another parallel groove 5b of guide rail 5 and partly formed by a front portion 13a, 13b respectively, connecting to the front end of grooves 5a, 5b. The front lower end of front portions 13a, 13b extend substantially vertical and the curve of the front portion 13a, 13b curves to a substantially horizontal orientation to connect to the respective groove 5a, 5b of guide rail 5. First lever 10 has a one-sided rear extension provided on its rear end with a slide shoe 14 engaging groove 5a of guide rail 5. Slide shoes 12a, 12b are spaced in transverse direction and opposed, while the cooperating guide curves 5a, 13a and 5b, 13b are also spaced and facing each other. The extension of first lever 10 carrying slide shoe 14 extends on one side of panel support 4 only.

The front device 6 comprises a second lever 15 which is pivotally connected to the panel support 4 on its front upper end through a pivot 16. The second lever 15 is controlled by driving slide 8, such that second lever 15 is allowed to pivot when closure panel 3 is moved in vertical direction and which is driven by the driving slide 8 when the closure panel 3 is moved in longitudinal direction. For this purpose, driving slide 8 and second lever 15 are in engagement with each other through a curve and pin connection, wherein a curve 17 in second lever 15 includes a sliding portion 17' enabling a pin 18 on driving slide 8 to move with respect to curve 17 in longitudinal direction of the vehicle and a locking portion 17'' disabling pin 18 to move with respect to curve 17 and thus with respect to second lever 15 in longitudinal direction of the vehicle.

The driving slide 8 is connected to rear device 7 through a connecting rod 19 which has a pivoting front part 20 connected to connecting rod 19 through a pivot 21 on its rear end and being provided with two opposed pins 22, 23. Pin 22 engaging in a curve 24 in the plastic part comprising curve front portion 13a. This curve 24 comprises a long, substantially horizontal curve portion 24' and a short, substantially vertical, upward locking portion 24" at the rear end of portion 24'.

Pin 23 is adapted to engage a curve 25 in driving slide 8. Curve 25 includes a short, substantially horizontal portion 25' open on its front end and a short, substantially vertical, downward locking portion 25" connecting to the rear end of portion 25'.

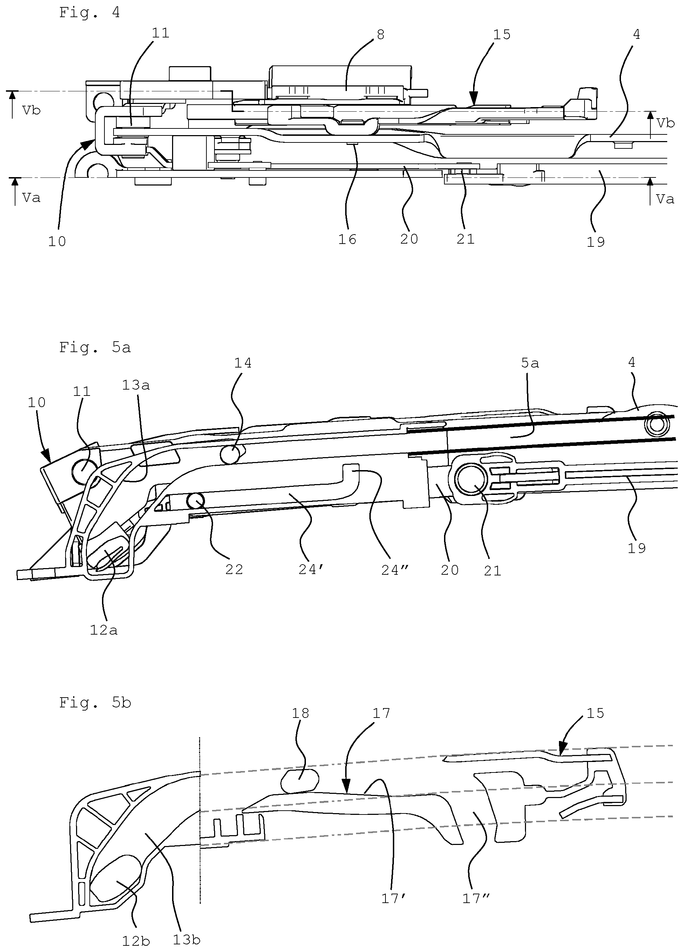

Figs. 5, 6 and 7 show the operation of front device 6, in which Figs. 5a, 6a and 7a show the operating mechanism from the outside and Figs. 5b, 6b and 7b show the parts of front device 6 that are hidden in Figs. 5a, 6a and 7a.

Fig. 5 shows front device 6 in a position in which closure panel 3 is in its closed position. Slide shoe 12a, 12b is in its front downward position within curve front portion 13a, 13b. Because rear slide shoe 14 is in groove 5a of guide rail 5, first lever 10 is in a forwardly tilted position in which pivot 11 to panel support 4 is in a position substantially above or slightly forward of slide shoes 12a, 12b. Pin 22 is at the front end of portion 24' of curve 24 and as a result, pin 23 is locked in locking portion 25" of curve 25 in driving slide 8 (not shown). This means that connecting rod 19 is locked with respect to driving slide 8 and therefore rear device 7 will be activated when driving slide 8 is moved. Pin 18 of driving slide 8 is at the start / front end of sliding portion 17' of curve 17 in second lever 15, as shown in Fig. 5b.

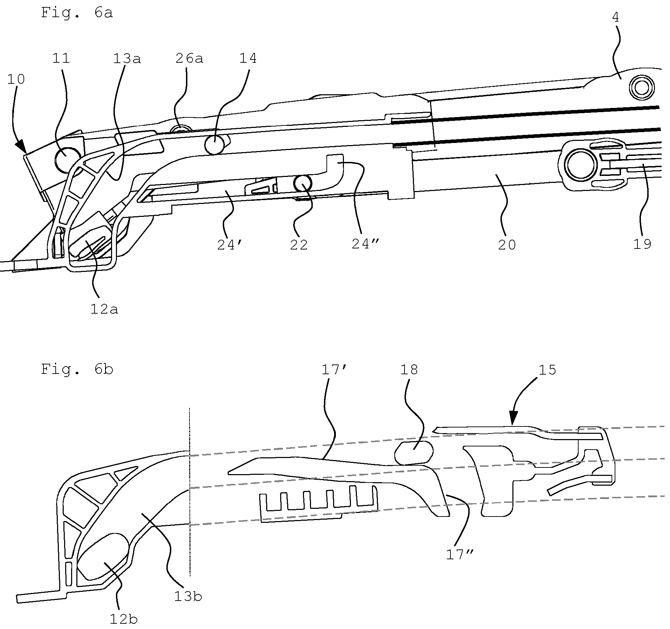

In Fig. 6, driving slide 8 is moved a distance rearwardly to thereby activate rear device 7 so as to tilt closure panel 3 to its venting position in which the rear of closure panel 3 is lifted. The panel support 4 is thus rotated around its front pivot 11 without hardly any movement of first lever 10 and thereby slide shoes 12a, 12b. This is an advantage over operating mechanisms in which a front slide shoe is attached directly to panel support 4 because a rotation of panel support 4 also dictates a rotation of front slide shoe, which may lead to complexities because the slide shoes are normally not circular in cross-section meaning that the curve and the slide shoe must be adapted to this rotation.

Fig. 6a shows that pin 22 is at the rear end of portion 24' of curve 24, in which pin 23 is still locked. Also pin 18 is at the rear end of sliding portion 17' of curve 17 in second lever 15. As second lever 15 is rotated slightly due to the rotation of panel support 4 sliding portion 17' of curve 17 in lever 15 is not straight but slightly curved. Sliding portion 17' remains in contact with pin 18 because there is a second pin engaging a curve at the lower side of second lever 15.

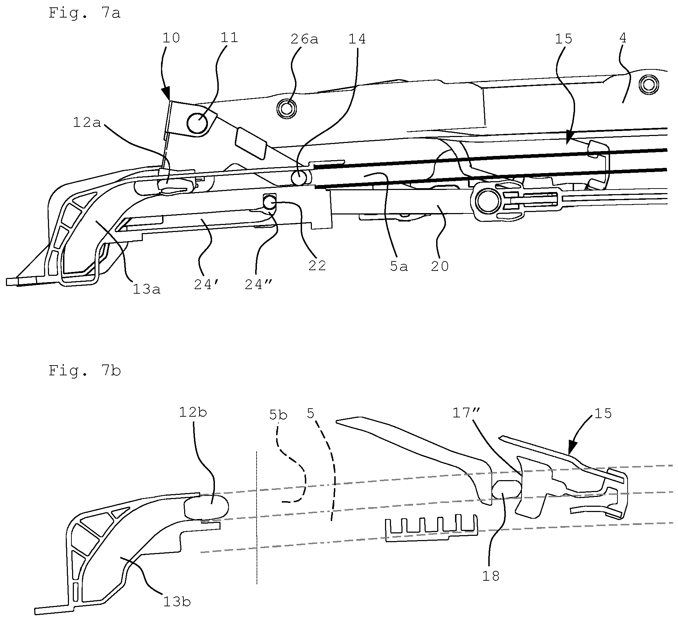

In Fig. 7, the front of panel support 4 and closure panel 3 is moved upwardly and rearwardly. This is a result of the fact that pin 18 has arrived in locking portion 17'' of curve 17 in second lever 15, so that driving slide 8 is locked to second lever 15 and therefore a rearward sliding movement of driving slide 8 results in a rearward movement of closure support 4 and closure panel 3. The rearward movement of panel support 4 results in a rearward movement of slide shoe 14 of first lever 10 and an upward and rearward movement of slide shoes 12a, 12b. This leads to a rotation of first lever 10 around slide shoe 14 while it is moving rearwardly. Once slide shoes 12a, 12b have arrived in grooves 5a, 5b of guide rail 5, first lever 10 stops rotating and is just a sliding support for the front end of panel support 4 and closure panel 3.

Fig. 7a also shows that pin 22 has entered locking portion 24'' of curve 24, so that pivoting front portion 20 of connecting rod 19 is locked with respect to guide rail 5 and therefore rear device 7 is locked in its upward position. On the other side of pivoting front part 20 of connecting rod 19, pin 23 is also moved upwards like pin 22, but this means for pin 23 that it is moved out of locking portion 25" of curve 25 in driving slide 8, so that driving slide 8 is free to move out of curve 25 and therefore free to move with respect to connecting rod 19. Thus, in this position driving slide 8 takes panel support 4 and closure panel 3 rearwardly through second lever 15, while panel support 4 slides with respect to rear device 7, as is known per se. Moving closure panel 3 back to its closed position leads to reversed movements of the parts as described above.

Figs. 2 and 3 further show that panel support 4 is attachable to closure panel 3 via a plurality of screwed connections 26a - 26e. The front screwed connection 26a is arranged at a longitudinal position between the first and second slide shoes 12a and 14 considered in the closed position of the closure panel 3. It is also arranged at a longitudinal position between the pivotal connections 11 and 16 of the first and second lever 10, 15 to panel support 4. The front screwed connection 26a is reachable with a tool from the side of panel support 4 where slide shoe 12b is positioned. As there is no fourth slide shoe, there is no part covering the screwed connection from this side. This makes it possible to change the height of closure panel 3 at the front side when closure panel 3 is in its closed position and to tighten the connection when correct. Fig. 6a shows that screwed connection 26a is covered by first lever 10 on the opposite side of panel support 4.

From the foregoing it will be clear that the invention provides an operating mechanism for a roof system having a front device which provides a stable support for the closure panel and a favourable movement of the front side of the closure panel. Furthermore, the first lever facilitates a modular design of the panel support as the slide shoes are now separate from the panel support.

The invention is not limited to the embodiment shown in the drawings and described above, which may be varied in different manners within the scope of the invention. Guide pins and cams may have all kinds of shapes and are not limited to the cross-sectional shapes shown in the drawings. The front device could also be used in other operating mechanisms, such as for example tilt-sliding roofs, topsliders and the like. Other movements of the front edge of closure panel could be effected if desired.

## Claims

1. Roof system for a vehicle having a roof opening (1) in a roof part (2) thereof, comprising:
at least a closure panel (3) which is movable between a closed position in which it closes the roof opening and an open position in which it opens the roof opening and is positioned at least partially above an adjoining portion of the roof part, the closure panel comprising a panel support (4),
an operating mechanism that operates the closure panel in a longitudinal direction of the vehicle,
a stationary guide rail (5) at each longitudinal side of said roof opening, slidably guiding said operating mechanism,
said operating mechanism comprising:
a rear device (7) connected to the panel support for moving the rear edge of the closure panel towards a raised position relative to the closed position and above the adjoining portion of the roof part,
a front device (6) connected to the panel support and including a first lever (10) for moving the front edge of the closure panel in a vertical direction, and
a driving slide (8) which is slidably accommodated in each guide rail and is drivable by a drive member in order to move the closure panel both in vertical and in horizontal direction through the front device and rear device,
wherein the first lever (10) of the front device (6) is pivotally connected to the panel support only and is provided with a first slide shoe (12a) which is in engagement with a stationary guide curve (5a) of the stationary guide rail (5), that includes a downwardly and forwardly inclining front portion (13a), such that the first lever slides and tilts when the slide shoe travels through the front portion of the stationary guide curve, wherein the first lever (10) comprises a second slide shoe (14) at a distance in longitudinal direction behind the first slide shoe, which second slide shoe is preferably in engagement with the stationary guide curve,
**characterized in that** the first lever (10) comprises a third slide shoe (12b) substantially in line with the first slide shoe (12a) and in engagement with a second stationary guide curve (5b) parallel to the stationary guide curve (5a),
wherein the third slide shoe (12b) is laterally spaced from the first slide shoe (12a), and wherein the first and second slide shoes are positioned on one side of the panel support (4) and the third slide shoe is positioned on the opposite side of the panel support,
wherein the panel support (4) is attached to the closure panel (3) via a plurality of screwed connections (26a-26e), wherein a front screwed connection (26a) is arranged at a longitudinal position between the first and second slide shoes (12a;14) considered in the closed position of the closure panel and is reachable with a tool from the side of the panel support (4) where the third slide shoe (12b) is positioned.

2. Roof system according to claim 1, wherein the second slide shoe (14) is in engagement with a substantially straight portion of the stationary guide curve connecting to a rear end of the front portion thereof.

3. Roof system according to any of the preceding claims, wherein the panel support (4) is connected to the first lever (10) at a position above and in front of the first slide shoe (12a).

4. Roof system according to any of the preceding claims, wherein the front device (6) comprises a second lever (15) which is pivotally connected to the panel support (4) on one of its ends and which is controlled by the driving slide (8), such that the second lever is allowed to pivot when the closure panel is moved in vertical direction and which is driven by the driving slide when the closure panel is moved in longitudinal direction.

5. Roof system according to claim 4, wherein the driving slide (8) and the second lever (15) are in engagement with each other through a curve and pin connection, wherein the curve (17) has a sliding portion (17') enabling the pin (18) to move with respect to the curve in longitudinal direction of the vehicle and a locking portion (17") disabling the pin to move with respect to the curve in longitudinal direction of the vehicle.

6. Roof system according to claim 4 or 5, wherein the second lever (15) is positioned at a distance behind the first lever (10).

7. Roof system according to claim 6, wherein the panel support (4) is attached to the closure panel (3) via a plurality of screwed connections (26a-26e), wherein a front screwed connection (26a) is arranged at a longitudinal position between the pivotal connections (11,16) of the first and second lever (10;15) to the panel support (4).

## Patentansprüche

1. Dachsystem für ein Fahrzeug, das eine Dachöffnung (1) in einem Dachteil (2) davon aufweist, aufweisend:
wenigstens ein Verschlusspaneel (3), das bewegbar ist zwischen einer Geschlossen-Position, in der es die Dachöffnung verschließt, und einer OffenPosition, in der es die Dachöffnung öffnet, und wenigstens teilweise oberhalb eines angrenzenden Abschnitts des Dachteils angeordnet ist, wobei das Verschlusspaneel einen Paneelträger (4) aufweist,
einen Betätigungsmechanismus, der das Verschlusspaneel in einer Längsrichtung des Fahrzeugs betätigt,
eine stationäre Führungsschiene (5) auf jeder Längsseite der Dachöffnung, die den Betätigungsmechanismus verschiebbar führt, wobei der Betätigungsmechanismus aufweist:
eine hintere Vorrichtung (7), die verbunden ist mit dem Paneelträger zum Bewegen des hinteren Randes des Verschlusspaneels in Richtung einer Angehoben-Position relativ zu der Geschlossen-Position und oberhalb des angrenzenden Abschnitts des Dachteils,
eine vordere Vorrichtung (6), die mit dem Paneelträger verbunden ist und einen ersten Hebel (10) zum Bewegen des vorderen Randes des Verschlusspaneels in einer vertikalen Richtung aufweist, und
einen Antriebsschlitten (8), der verschiebbar in jeder Führungsschiene aufgenommen ist und durch ein Antriebselement antreibbar ist, um das Verschlusspaneel sowohl in einer vertikalen als auch in einer horizontalen Richtung durch die vordere Vorrichtung und die hintere Vorrichtung zu bewegen,
wobei der erste Hebel (10) der vorderen Vorrichtung (6) nur mit dem Paneelträger schwenkbar verbunden ist und mit einem ersten Verschiebeschuh (12a) bereitgestellt ist, der in Eingriff steht mit einem stationären Führungsbogen (5a) der stationären Führungsschiene (5), der einen nach unten und nach vorne geneigten vorderen Abschnitt (13a) aufweist, sodass sich der erste Hebel verschiebt und neigt, wenn der Verschiebeschuh durch den vorderen Abschnitt des stationären Führungsbogens fährt, wobei der erste Hebel (10) einen zweiten Verschiebeschuh (14) in einem Abstand in einer Längsrichtung hinter dem ersten Verschiebeschuh aufweist, welcher zweiter Verschiebeschuh vorzugsweise in Eingriff steht mit dem stationären Führungsbogen,
**dadurch gekennzeichnet, dass** der erste Hebel (10) einen dritten Verschiebeschuh (12b) aufweist, der mit dem ersten Verschiebeschuh (12a) im Wesentlichen ausgerichtet ist und in Eingriff mit einem zweiten stationären Führungsbogen (5b) steht, der parallel zu dem stationären Führungsbogen (5a) ist,
wobei der dritte Verschiebeschuh (12b) lateral im Abstand von dem ersten Verschiebeschuh (12a) angeordnet ist, und wobei der erste und zweite Verschiebeschuh auf einer Seite des Paneelträgers (4) angeordnet sind und der dritte Verschiebeschuh auf der gegenüberliegenden Seite des Paneelträgers angeordnet ist,
wobei der Paneelträger (4) an dem Verschlusspaneel (3) mittels mehrerer Schraubverbindungen (26a-26e) angebracht ist, wobei eine vordere Schraubverbindung (26a) angeordnet ist an einer Längsposition zwischen dem ersten und dem zweiten Verschiebeschuh (12a; 14) in der Geschlossen-Position der Verschlusspaneels und mit einem Werkzeug von der Seite des Paneelträgers (4) erreichbar ist, auf der der dritte Verschiebeschuh (12b) angeordnet ist.

2. Dachsystem nach Anspruch 1, wobei der zweite Verschiebeschuh (14) in Eingriff steht mit einem im Wesentlichen geraden Abschnitt des stationären Führungsbogens, der mit einem hinteren Ende des vorderen Abschnitts davon verbunden ist.

3. Dachsystem nach einem der vorhergehenden Ansprüche, wobei der Paneelträger (4) verbunden ist mit dem ersten Hebel (10) an einer Position über und vor dem ersten Verschiebeschuh (12a).

4. Dachsystem nach einem der vorhergehenden Ansprüche, wobei die vordere Vorrichtung (6) einen zweiten Hebel (15) aufweist, der schwenkbar verbunden ist mit dem Paneelträger (4) an einem seiner Enden und welcher von dem Antriebsschlitten (8) so gesteuert wird, dass dem zweiten Hebel gestattet wird zu schwenken, wenn das Verschlusspaneel in einer vertikalen Richtung bewegt wird, und welcher durch den Antriebsschlitten angetrieben wird, wenn das Verschlusspaneel in einer Längsrichtung bewegt wird.

5. Dachsystem nach Anspruch 4, wobei der Antriebsschlitten (8) und der zweite Hebel (15) miteinander in Eingriff stehen durch eine Bogen-und-Stift-Verbindung, wobei der Bogen (17) aufweist: einen Verschiebeabschnitt (17'), der es dem Stift (18) ermöglicht, sich in Bezug auf den Bogen in einer Längsrichtung des Fahrzeugs zu bewegen, und einen Verriegelungsabschnitt (17"), der verhindert, dass sich der Stift in Bezug auf den Bogen in einer Längsrichtung des Fahrzeugs bewegt.

6. Dachsystem nach Anspruch 4 oder 5, wobei der zweite Hebel (15) in einem Abstand hinter dem ersten Hebel (10) angeordnet ist.

7. Dachsystem nach Anspruch 6, wobei der Paneelträger (4) an dem Verschlusspaneel (3) mittels mehrerer Schraubverbindungen (26a-26e) angebracht ist, wobei eine vordere Schraubverbindung (26a) angeordnet ist an einer Längsposition zwischen den Schwenkverbindungen (11, 16) des ersten und des zweiten Hebels (10; 15) mit dem Paneelträger (4).

## Revendications

1. Système de toit pour un véhicule ayant une ouverture de toit (1) dans une partie de toit (2) de celui-ci, comprenant :
au moins un panneau de fermeture (3) qui est mobile entre une position fermée dans laquelle il ferme l'ouverture de toit et une position ouverte dans laquelle il ouvre l'ouverture de toit et est positionné au moins partiellement au-dessus d'une portion attenante de la partie de toit, le panneau de fermeture comprenant un support de panneau (4),
un mécanisme d'actionnement qui actionne le panneau de fermeture dans une direction longitudinale du véhicule,
un rail de guidage immobile (5) de chaque côté longitudinal de ladite ouverture de toiture, guidant à coulissement ledit mécanisme d'actionnement, ledit mécanisme d'actionnement comprenant :
un dispositif arrière (7) raccordé au support de panneau pour le déplacement du bord arrière du panneau de fermeture vers une position relevée par rapport à la position fermée et au-dessus de la portion attenante de la partie de toit, un dispositif avant (6) raccordé au support de panneau et comportant un premier levier (10) pour le déplacement du bord avant du panneau de fermeture dans une direction verticale, et
une glissière d'entraînement (8) qui est accueillie à coulissement dans chaque rail de guidage et est apte à être entraînée par un organe d'entraînement afin de déplacer le panneau de fermeture à la fois dans la direction verticale et horizontale à travers le dispositif avant et le dispositif arrière,
dans lequel le premier levier (10) du dispositif avant (6) est raccordé à pivotement au support de panneau uniquement et est pourvu d'un premier patin coulissant (12a) qui est en prise avec une courbe de guidage immobile (5a) du rail de guidage immobile (5), qui comporte une portion avant (13a) inclinée vers le bas et vers l'avant, de sorte que le premier levier coulisse et s'incline lorsque le patin coulissant chemine à travers la portion avant de la courbe de guidage immobile, dans lequel le premier levier (10) comprend un deuxième patin coulissant (14) à une distance dans la direction longitudinale derrière le premier patin coulissant, lequel deuxième patin coulissant est de préférence en prise avec la courbe de guidage stationnaire,
**caractérisé en ce que** le premier levier (10) comprend un troisième patin coulissant (12b) sensiblement en ligne avec le premier patin coulissant (12a) et en prise avec une deuxième courbe de guidage immobile (5b) parallèle à la courbe de guidage immobile (5a),
dans lequel le troisième patin coulissant (12b) est espacé latéralement du premier patin coulissant (12a), et dans lequel les premier et deuxième patins coulissants sont positionnés sur un côté du support de panneau (4) et le troisième patin coulissant est positionné sur le côté opposé du support de panneau,
dans lequel le support de panneau (4) est fixé au panneau de fermeture (3) via une pluralité de raccords filetés (26a-26e), dans lequel un raccord fileté avant (26a) est agencé à une position longitudinale entre les premier et deuxième patins coulissants (12a ; 14) considérés dans la position fermée du panneau de fermeture et peut être atteint avec un outil depuis le côté du support de panneau (4) où le troisième patin coulissant (12b) est positionné.

2. Système de toit selon la revendication 1, dans lequel le deuxième patin coulissant (14) est en prise avec une portion sensiblement droite de la courbe de guidage immobile se raccordant à une extrémité arrière de sa portion avant.

3. Système de toit selon l'une quelconque des revendications précédentes, dans lequel le support de panneau (4) est raccordé au premier levier (10) à une position au-dessus de et en face du premier patin coulissant (12a).

4. Système de toit selon l'une quelconque des revendications précédentes, dans lequel le dispositif avant (6) comprend un deuxième levier (15) qui est raccordé à pivotement au support de panneau (4) sur l'une de ses extrémités et qui est commandé par le coulisseau d'entraînement (8), de sorte que le deuxième levier est autorisé à pivoter lorsque le panneau de fermeture est déplacé dans la direction verticale et qui est entraîné par le coulisseau d'entraînement lorsque le panneau de fermeture est déplacé dans la direction longitudinale.

5. Système de toit selon la revendication 4, dans lequel le coulisseau d'entraînement (8) et le deuxième levier (15) sont en prise l'un avec l'autre via un raccord à courbe et cheville, dans lequel la courbe (17) présente une portion coulissante (17') permettant à la cheville (18) de se déplacer par rapport à la courbe dans la direction longitudinale du véhicule et une portion de verrouillage (17") interdisant à la cheville de se déplacer par rapport à la courbe dans une direction longitudinale du véhicule.

6. Système de toit selon la revendication 4 ou 5, dans lequel le deuxième levier (15) est positionné à une distance derrière le premier levier (10).

7. Système de toit selon la revendication 6, dans lequel le support de panneau (4) est fixé au panneau de fermeture (3) via une pluralité de raccords filetés (26a-26e), dans lequel un raccord fileté avant (26a) est agencé à une position longitudinale entre les raccords pivotants (11, 16) du premier et du deuxième levier (10 ; 15) au support de panneau (4).
